# EUROPEAN PATENT APPLICATION

(11) **EP 2 104 312 A1**
(43) Date of publication of application: **23.09.2009**
(21) Application number: 08005059.4
(22) Date of filing: 18.03.2008
(51) Int. Cl.: H04L 29/08

(54) **AAA based location retrieval**

(71) Applicant: Nokia Siemens Networks Oy, 02610 Espoo (FI)
(72) Inventor: Arumaithurai, Mayutan, 81539 München (DE); Tschofenig, Hannes, 02180 Espoo (FI)
(74) Representative: Krombach, Rainer

(57) **Abstract**

A computer network is provided. The computer network comprises an AAA (Authentication, Authorization, and Accounting) client with an extension for requesting location information of a user.

## Description

This application relates to a provision of location-based services (LBS). The application provides for an AAA (Authentication, Authorization, and Accounting) aware location-based application server (Lb-AP) and a method for the Lb-AP to obtain location information (LI).

Wireless LAN access networks are being deployed in public places such as airports, hotels, shopping malls, and coffee shops by a diverse set of operators. The operators include cellular carriers, wireless Internet service providers, and fixed broadband operators. These networks are also called Public Wireless Local Area Networks (PWLAN).

The PWLAN operators have expressed interest in offering location-based services. Applications for these location-based services include areas such as property management, emergency and safety, as well as entertainment and tourism.

In the property management area, the location-based service can provide for monitoring of equipments. The location-based service may locate children or pets or provide guarding of individuals, in the emergency and safety area. Car or human navigation together with travel guide may be provided by the location-based service in the entertainment and tourism area.

The location-based service can be provided through means, such as PCS (Personal Communication Services) phone or PDA (Personal Digital Assistant) with differential GPS (Global Positioning System). Telephone numbers of the PCS phones are used to link individuals to services that the individuals want.

When a user executes a network-access authentication procedure to the network, information about a location and operational ownership of the network may be conveyed to a user's home network to which the user has a contractual relationship.

The network may convey the information using Remote Authentication Dial In User Service (RADIUS) protocol or Diameter protocol.

The RADIUS protocol is shown in
C. Rigney, S. Willens, A. Rubens, and W. Simpson, June 2000, "Remote Authentication Dial In User Service (RADIUS)", http://tools.ietf.org/html/rfc2865,
herewith called document D1.

The Diameter protocol is shown in
P. Calhoun, J. Loughney, E. Guttman, G. Zorn, and J. Arkko, September 2003, "Diameter Base Protocol", http://www.rfc-editor.org/rfc/rfc3588.txt
herewith called document D2.

Procedures for conveying the location information based on a civic and geospatial location format in the RADIUS or in the Diameter protocol are described in
Tschofenig, H., "Carrying Location Objects in RADIUS and Diameter", draft-ietf-geopriv-radius-lo-19.txt, http://tools.ietf.org/id/draft-ietf-geopriv-radius-lo-19.txt, December 2007,
herein called document D3.

D3 also provides mechanisms to preserve a user's privacy, which is important, during the distribution of the location information.

This application provides a means for a location-based application server (Lb-AP) to obtain a location-information (LI) from a user's AAA (Authentication, Authorization, and Accounting) server. The Lb-AP requires the location-information (LI) of the user to provide a location-based service (LBS). The AAA server can provide the location information in the form of location information by-reference (LbyR) or in the form of the location information by-value (LbyV) depending on factors, such as authorization, requirements, or availability.

A computer network is provided. The computer network comprises an AAA (Authentication, Authorization, and Accounting) client with an extension for requesting location information of a user.

The AAA client can be is in the form of a location-based application provider. The computer network can comprise an AAA server. The AAA server can be in the form of a RADIUS server. The AAA server can also be in the form of a Diameter server.

A method of operating a computer network is provided. The method comprises the step of requesting of location information of a user by an AAA client.

The method can comprise the further step of requesting a location-based service by a user to the AAA client before the step of requesting of the location information of the user or comprise the further step of requesting of the location information of the user by the AAA client to the AAA server. The method can also comprise the further step of sending of the location information of the user by the AAA server to the AAA client.

The AAA client can be in the form of a location-based application provider. The AAA server can be in the form of a RADIUS server or be in the form of a Diameter server. The location information of the user can be in the form of location information by reference or be in the form of location information by value.

This method advantageously provides a smooth integration into existing AAA infrastructure. Minimal extensions are required to support this implementation. The implementation is thus simple with low cost.
- FIG. 1: illustrates a computer network with a user and
- FIG. 2: illustrates a message flow of a user of the computer network of FIG. 1, the message flow requests for a provision of a location-based application service.

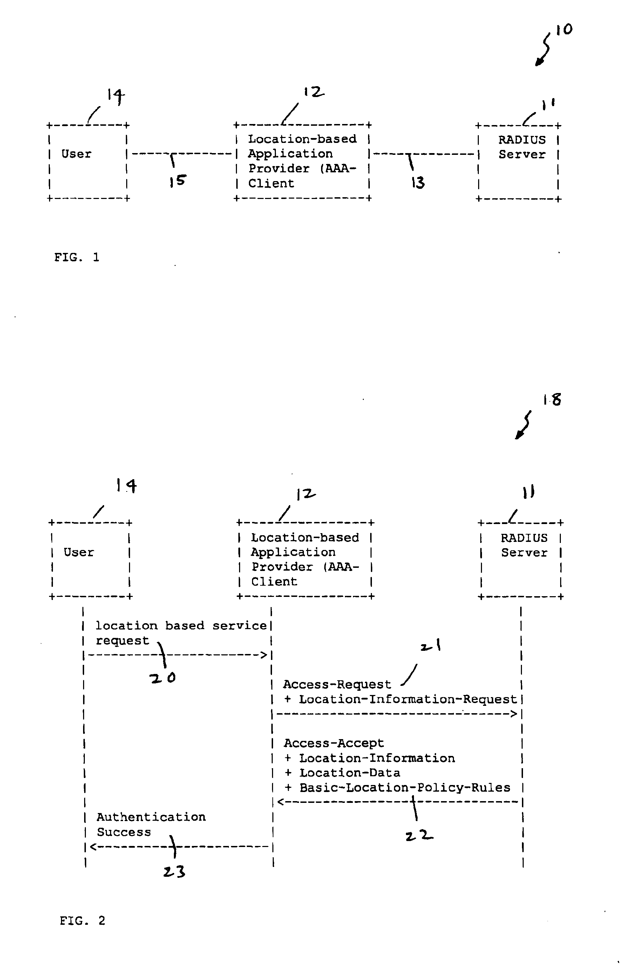

FIG. 1 depicts a computer network 10. The computer network 10 comprises a RADIUS server 11 and a location-based application provider (Lb-Ap) 12 that is connected to the RADIUS server 11 by a communication link 13.

The Lb-Ap 12 is connected to the user 14, by a wireless communication link 15. The Lb-Ap 12 has an extension to request for location information of the user 14 from the RADIUS server 11.

In a broad sense, the user 14 can have a user-equipment for communicating with the Lb-Ap 12. The user-equipment can be in the form of a cellular phone, a PDA, or a computing device with a wireless modem. The Lb-Ap 12 is a form of an AAA client whilst the RADIUS server 11 is a form of an AAA server. The Lp-Ap 12 can be also a form of a Network Access Server (NAS). A mobile node (MN) can replace the user 14. Other forms of communication link can also replace the wireless communication link 15. The RADIUS server 11 need not be directly connected to the Lb-Ap 12

The extension enables the Lb-Ap 12 to obtain the user's location information so that the location-based application is enabled to provide location-based services. This is unlike most application provider, which does not have support to request for a user's location information.

The user 14, as provided here, requests a service from the Lb-Ap 12. The service may be for a location-aware billing, a location-aware authorization, or a location-aware service. The request can also be for access to network resources of the computer network 10.

The Lb-Ap 12 acts as a client of the RADIUS server 11 in which the client contacts the RADIUS server 11 to request for location information of the user 14. The location information is used to support the location-based service.

The RADIUS server 11 is intended for providing the location information to the Lb-Ap 12. The RADIUS server 11 may obtain the location information from a location server. The location server is also known as location information server (LIS). The location information can be provided as location information by reference (LbyR) or as location information by value (LbyV).

The LbyR and the LbyV are shown in
R. Marshall, Ed., "Requirements for a Location-by-Reference Mechanism", draft-ietf-geopriv-lbyr-requirements-01, http://www.ietf.org/internet-drafts/draft-ietf-geopriv-lbyr-requirements-01.txt, October 2007,
herein called document D4.

The RADIUS server 11 may be used to provide an authentication process to authenticate the user 14, an authorization process to grant or to deny the user 14 access to the location-based service, or an accounting process to track activities of the user 14.

FIG. 2 illustrates a method for requesting a provision of location information for a location-based application service.

FIG. 2 shows a message flow 18 for the user 14 of FIG. 1. The message flow 18 commences with the user 14 sending a location-based service request message 20 to the Lb-Ap 12.

As location information of the user 14 is needed to provide the requested location-based service, the Lb-Ap 12 then sends an Access-Request message 21 with an extension to the RADIUS server 11.

The Access-Request message 21 is shown in document D3. The extension comprises a Location-Information-Request attribute, which is used by the Lb-Ap 12 to request for the needed location information.

The RADIUS server 11 receives the Access-Request message 21 and it then performs authentication process to identify the user 14. The identification could, for example, be based on a username of the user 14 and a password. After the user 14 has been authenticated, the RADIUS server 11 then performs authorization process to grant or to deny the user 14 access to the location-based service. The authorization is based on an authorization level of the user 14. Once the user 14 is authorized to access the location-based service, the RADIUS server 11 also starts an accounting process to track activity of the user 14 with the location-based service. The tracking may include amount of time that the user 14 spent on the location-based service.

The RADIUS server 11 afterward sends an Access-Accept message 22 to the Lb-Ap 12, if the user 14 has been granted access to the location-based service. The Access-Accept message 22 includes a Location-Information attribute, a Location-Data attribute, and a Basic-Location-Policy-Rules attribute. The Access-Accept message 22, the Location-Information attribute, the Location-Data attribute, and the Basic-Location-Policy-Rules attribute are disclosed in D3.

The Location-Data attribute provides location information of the user 14. The Location-Information attribute provides meta-data about the location information, such as sighting time, time-to-live, and location determination method. The Basic-Location-Policy-Rules attribute provides Policy rules to control the distribution of location information for privacy purposes.

The Lb-Ap 12 later sends an Authentication Success message 23 to the user 14. The Authentication Success message 23 informs the user 14 of a status of the location-based service request.

In a generic sense, other forms of authentication, beside the example described above, are also possible.

The steps shown above to request provision of location information can be integrated smoothly into most existing AAA infrastructure, as only little new extension needed.

In summary, this application provides for an AAA client to request an AAA server for a location-information (LI) of a user and for the AAA server to provide the AAA client with the requested LI. The AAA client can be in the form of an application server whilst the AAA server can be in the form of RADIUS or Diameter server.

The RADIUS and Diameter protocols are often used for authentication, authorization, and accounting (AAA) process by application servers. During the process, the application server interacts with the AAA server. By utilizing this interaction for location-based applications, most existing infrastructure is used and only little new infrastructure are needed.

A location-based application server (Lb-AP) requires the location-information (LI) of the user to provide location-based services (LBS) to the user. The Lb-AP may obtain the required LI during an authentication and authorization process.

Required extensions to support the location-based services are minimal. The new RADIUS or Diameter attribute, in the above example called Location-Information-Request, is used to allow the application server to indicate a request for location information. This attribute may be sent in the RADIUS Access-Request message for the RADIUS example.

On receiving the Location-Information-Request attribute, the AAA server, after authenticating and authorizing, can reply to the Lb-AP by sending the location information in the Access-Accept message. The provided location information can be in the form of location information by value (LbyV) or of location information by reference (LbyR).

### List of abbreviations

- AAA: Authentication, Authorization, and Accounting
- GPS: Global Positioning System
- Lb-Ap: Location based Application Provider.
- LbyR: Location Information by-Reference
- LbyV: Location Information by-Value
- LBS: location-base service
- LI: Location Information
- LIS: Location Information Server
- MN: Mobile Node
- NAS: Network Access Server
- PCS: Personal Communication Services
- PDA: Personal Digital Assistant
- PWLAN: Public Wireless Local Area Network
- RADIUS: Remote Authentication Dial in User Service

### Reference numbers

- 10: computer network
- 11: RADIUS server
- 12: location-based application provider
- 13: communication link
- 14: user
- 15: communication link
- 18: message flow
- 20, 21, 22, 23: message

## Claims

1. A computer network comprising
an AAA (Authentication, Authorization, and Accounting) client with an extension for requesting location information of a user.

2. The computer network of claim 1
**characterised in that**
the AAA client is in the form of a location-based application provider.

3. The computer network of claim 1 or 2
**characterised in that**
the computer network comprises an AAA server.

4. The computer network of claim 3
**characterised in that**
the AAA server is in the form of a RADIUS server.

5. The computer network of claim 3
**characterised in that**
the AAA server is in the form of a Diameter server.

6. A method of operating a computer network, the method comprises the step of
requesting of location information of a user by an AAA client.

7. The method of claim 6
comprises the further step of
requesting a location-based service by a user to the AAA client before the step of requesting of the location information of the user.

8. The method of claim 6 or 7
comprises the further step of
requesting of the location information of the user by the AAA client to the AAA server]

9. The method of one of the claims 6 to 8
comprises the further step of
sending of the location information of the user by the AAA server to the AAA client.

10. The method of one of the claims 6 to 9
**characterised in that**
the AAA client is in the form of a location-based application provider.

11. The method of one of the claims 6 to 10
**characterised in that**
the AAA server is in the form of a RADIUS server.

12. The method of one of the claims 6 to 10
**characterised in that**
the AAA server is in the form of a Diameter server.

13. The method of one of the claims 6 to 12
**characterized in that**
the location information of the user is in the form of location information by reference.

14. The method of one of the claims 6 to 12
**characterised in that**
the location information of the user is in the form of location information by value.
